(19) **Europäisches Patentamt / European Patent Office / Office européen des brevets**

(11) **EP 4 469 266 B1**

(12) **EUROPEAN PATENT SPECIFICATION**

(45) Date of publication and mention
of the grant of the patent:
**28.01.2026 Bulletin 2026/05**

(21) Application number: **22710951.9**

(22) Date of filing: **28.01.2022**

(51) International Patent Classification (IPC):
***B29C 70/32*** *(2006.01)*     ***B29C 70/22*** *(2006.01)*
***B29C 53/68*** *(2006.01)*     ***B29C 70/54*** *(2006.01)*

(52) Cooperative Patent Classification (CPC):
**B29C 70/32; B29C 53/68; B29C 70/222;
B29C 70/543**

(86) International application number:
**PCT/CZ2022/050008**

(87) International publication number:
**WO 2023/143649 (03.08.2023 Gazette 2023/31)**

(54) **METHOD OF BRAIDING REINFORCING FIBERS ON A FORMING CORE IN THE PRODUCTION OF A FIBER COMPOSITE STRUCTURE, AND A BRAIDED FIBER COMPOSITE STRUCTURE PREPARED BY THIS METHOD**

VERFAHREN ZUM FLECHTEN VON VERSTÄRKUNGSFASERN AUF EINEM FORMKERN BEI DER HERSTELLUNG EINER FASERVERBUNDSTRUKTUR UND MIT DIESEM VERFAHREN HERGESTELLTE GEFLOCHTENE FASERVERBUNDSTRUKTUR

PROCÉDÉ DE TRESSAGE DE FIBRES DE RENFORT SUR UN NOYAU DE FORMAGE DANS LA PRODUCTION D'UNE STRUCTURE COMPOSITE DE FIBRES ET STRUCTURE COMPOSITE DE FIBRES TRESSÉES PRÉPARÉE PAR CE PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.12.2024 Bulletin 2024/49**

(73) Proprietor: **Technicka Univerzita v Liberci
46001 Liberec 1 (CZ)**

(72) Inventors:
• **MLYNEK, Jaroslav
109 00 Praha 15 (CZ)**
• **PETRU, Michal
460 06 Liberec, Liberec VI-Rochlice (CZ)**
• **MARTINEC, Tomas
466 04 Jablonec nad Nisou (CZ)**

• **KOLOOR, Seyed Saeid Rahimian
460 08 Liberec 8 (CZ)**

(74) Representative: **Musil, Dobroslav
Dobroslav Musil a partneri s.r.o.
Zabrdovicka 11
615 00 Brno (CZ)**

(56) References cited:
**EP-A1- 1 491 674**     **FR-A1- 2 874 852**

• **POTLURI P ET AL: "Geometrical modelling and control of a triaxial braiding machine for producing 3D preforms", COMPOSITES PART A, ELSEVIER, AMSTERDAM, NL, vol. 34, no. 6, 1 June 2003 (2003-06-01), pages 481 - 492, XP004428274, ISSN: 1359-835X, DOI: 10.1016/ S1359-835X(03)00061-7**

## Description

## Technical field

The invention relates to a method of laying reinforcing fibres on a forming core in the production of a fibre composite structure.

The invention also relates to a fibre composite structure prepared by this method.

## Background art

Composite materials are currently widely used materials that consist of two, or even more, chemically different components (phases). Their main component is reinforcement, which is a harder, stiffer and firmer discontinuous component that provides the desired mechanical properties to the composite material, and matrix, which is a continuous and usually more flexible component that acts as a binder for the reinforcement. Glass, carbon, polymer (e.g., aramid), ceramic or metal fibres with a diameter of 5 to 20 $\mu$m are most often used as the reinforcement. These fibres may optionally be supplemented with microparticles or nanoparticles of the same materials; materials based on resin, polymer, metal, carbon, glass, glass ceramics or ceramics are generally used as the matrix.

Furthermore, also the so-called fibre composite structures are used in many different applications and fields. These are structures consisting of a forming core, usually made of polymer, on which a composite material is deposited. The forming core provides the required shape and dimensions to this structure and the composite material provides with the required mechanical properties to the structure.

The advantage of composite materials and fibre composite structures over, for example, metallic materials is significantly lower weight with the same or even better mechanical properties - tensile, compressive and torsional resistance, flexibility, weather resistance and long service life. These materials are mainly used in the aerospace industry (e.g., for aircraft fuselage reinforcement, attachment of window frames to a fuselage, aircraft cabin reinforcement, etc.), in automotive industry (e.g., vehicle chassis, body, door reinforcement), in shipbuilding (e.g., hull reinforcement, mast construction), in the production of technical equipment in agriculture (e.g., reinforcement of some devices of agricultural machinery, reinforcement of large liquid tanks, etc.), in medicine, in the production of sports equipment, etc.

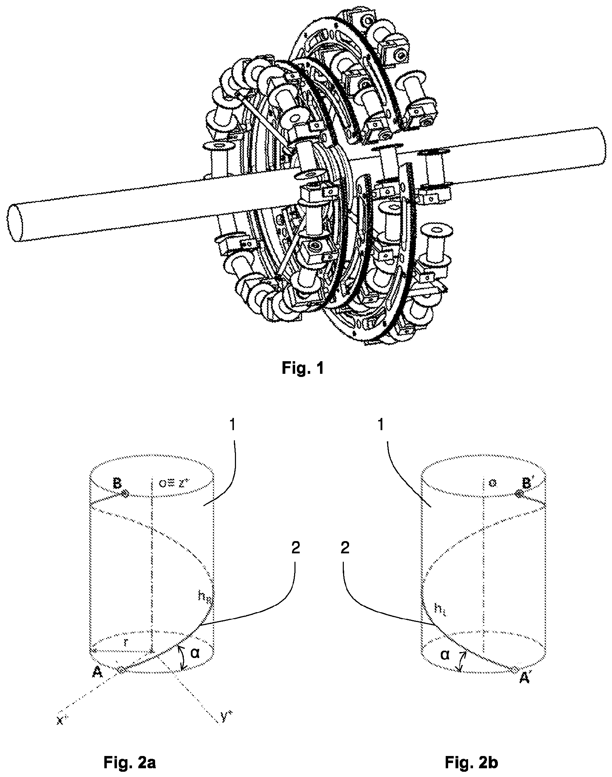

The reinforcing fibres are contained in the composite either as chopped fibres having a length in the order of several millimetres, when they are dispersed in the matrix, or in the form of strands (so-called rovings) which form a continuous fibre structure throughout the composite. Composites with strands of reinforcing fibres are in most cases produced by the winding of strands of reinforcing fibres impregnated with the matrix (so-called wet winding) onto a suitable forming core the shape of which corresponds to the shape of the desired composite product; less often they are produced by the winding of strands of reinforcing fibres without a matrix and only by subsequently impregnating the formed winding with a matrix (so-called dry winding). The forming core passes, usually at a constant speed, through the winding head with circular rotary rings with coils of reinforcing fibres - see, for example, Fig. 1, which schematically shows one variant of a winding head of a known type, whereby at least one layer of the reinforcing fibres is wound at a specified angle onto this core from rotating rings with coils. After winding the strands of reinforcing fibres and applying the matrix, the composite is thermally cured.

In terms of mechanical properties, carbon fibres are the most suitable reinforcing fibres. Their disadvantage, however, is that their price is by one order of magnitude higher than that of other types of reinforcing fibres used, such as glass fibres, polymer fibres or fibres from recycled materials. The price of carbon fibres then considerably increases the price of the composite and of the fibre composite structure, as well as the price of the entire product. As fibres from recycled materials, for example, textile fibres made of synthetic or natural polymers such as polyester, polyamide, viscose, cotton, wool, etc., are used. As fibres from the biomaterial, fibres based on a natural polymer, such as polylactide (PLA), polycaprolactone (PCL), etc., or fibres based on proteins or starches are used. FR 2 874 852 A1 discloses a method of laying reinforcing fibres on a forming core in the production of a fibre composite structure, in which a forming core passes through a winding head with a rotary ring with coils of reinforcing fibres, from which the reinforcing fibres are unwound and laid on the surface of the forming core, wherein during the laying of the reinforcing fibres on the surface of the forming core, the speed of rotation of the rotary ring with coils of reinforcing fibres changes, as a result of which the orientation angle between the longitudinal axis of the forming core and the axis of the reinforcing fibres laid on the forming core changes, wherein at least two sections are formed on the surface of the forming core with a different orientation angle of the reinforcing fibres.

The objective of the invention is to provide a method of laying reinforcing fibres on a forming core in the production of a fibre composite structure, and a fibre composite structure prepared by using this method of laying, which would eliminate the disadvantages of the background art.

## Principle of the invention

The objective of the invention is achieved by a method of laying reinforcing fibres on a forming core in the production of a fibre composite structure, in which the forming core passes through a winding head with a rotary rings with coils of reinforcing fibres, from which the reinforcing fibres are unwound and deposited on the surface of the forming core. The principle of the method consists in the fact that during the laying of the reinforcing fibres on the surface of the forming core, the speed of rotation of the rotary ring of coils with reinforcing fibres and/or the speed of advance motion of the forming core changes smoothly at least once. As a result, the orientation angle between the longitudinal axis of the forming core and the longitudinal axis of the reinforcing fibres laid on the forming core changes smoothly, resulting in at least two sections with different orientation angles of the reinforcing fibres on the surface of the forming core, wherein the reinforcing fibres of these sections smoothly merge into each other.

In at least one section of the forming core, the reinforcing fibres are laid on the surface thereof with an orientation angle of 30 to 60 °, and in at least one other section of the forming core, the reinforcing fibres are laid on the surface thereof with a smaller orientation angle, preferably, e.g., of less than 30 °.

The reinforcing fibres are fixed immediately after being laid on the surface of the forming core by the winding of at least one fibre of thermoplastic material which is preferably laid with an orientation angle greater than 30 ° and at the same time less than 90 °.

In this way, a fibre composite structure is prepared, which contains a forming core on which is deposited a composite consisting of at least one layer of reinforcing fibres bonded by a matrix, whereby the reinforcing fibres of at least one layer of the composite are deposited on the forming core in at least two sections wherein the reinforcing fibres of these sections smoothly merge into each other and the sections differ in the orientation angle of the reinforcing fibres.

In a preferred variant of embodiment, the reinforcing fibres are deposited in at least one section of the forming core with an orientation angle of 30 to 60 °, and in at least one other section of the forming core, the reinforcing fibres are deposited with a smaller orientation angle, preferably, e.g., of less than 30 °.

The reinforcing fibres are fixed in at least one section of the forming core by the winding of at least one fibre of thermoplastic material, preferably with an orientation angle greater than 30 ° and at the same time less than 90 °.

## Description of the drawings

In the enclosed drawings, Fig. 1 schematically shows a variant of a well-known winding head for laying reinforcing fibres on a forming core, which comprises three circular rotary rings with coils of reinforcing fibres and through which the straight forming core with a circular cross-section passes in the variant shown, Figs. 2a and 2b show two variants of winding the reinforcing fibres on the forming core with a circular cross-section - with a right-handed helix in Fig. 2a and with a left-handed helix in Fig. 2b. Fig. 3 shows two right-handed helices of the winding of the reinforcing fibres on the forming core with a circular cross-section which are shifted from one another by angle λ, Fig. 4 shows one thread of the helix of the winding of the reinforcing fibres unrolled into a plane, Fig. 5a shows a right-handed winding of the reinforcing fibres and of the fibre of thermoplastic material prepared by the method according to the invention. Finally, Fig. 5b shows a cover winding of fibres which is deposited on the winding according to Fig. 5a which is formed by one right-handed and one left-handed winding of fibres other than the winding according to Fig. 5a.

## Examples of embodiment

In the method of laying reinforcing fibres 2 on a forming core 1 in the production of the fibre composite structure according to the invention, reinforcing fibres 2 are laid on different parts of the forming core $\underline{1}$ with different orientation angles $\underline{\beta}$ (i.e. the angles between the longitudinal axis 10 of the forming core 1 and the longitudinal axes of the reinforcing fibres 2 being laid), wherein sections of reinforcing fibres 2 with different orientation angles $\underline{\beta}$ on different parts of the forming core 1 smoothly merge into each other. This makes it possible to reduce the required amount of reinforcing fibres 2 while maintaining the required mechanical properties of the fibre composite structure being formed. A smooth change of the orientation angle $\underline{\beta}$ is achieved by regulating the angular speed of rotation of the individual rotary rings of the winding head (and/or by regulating the speed of passage of the forming core 1 through the winding head). Based on the load model of the given fibre composite structure, it is possible to determine for each part of this structure the appropriate size of the orientation angle $\underline{\beta}$ of the reinforcing fibres 2, or pitch angle $\underline{\alpha}$ of the reinforcing fibres 2, i.e., the angle under which the reinforcing fibres 2 wrap the forming core 1. For example, in parts of the fibre composite structure that will be stressed mainly in torsion, bending or pressure, the preferred size of the orientation angles $\underline{\beta}$ is 30 to 60 °, preferably $45 \pm 5$ °, which corresponds to the size of the pitch angle $\underline{\alpha}$ of the winding of 30 to 60 °, preferably $45 \pm 5$ ° ($\alpha = 90$ ° - $\beta$); in the parts of the fibre composite structure that will be stressed mainly in tension, he preferred size of the orientation angle $\underline{\beta}$ is 0 to 45 °, preferably 0 to 30 °, which corresponds to the size of the pitch angle $\underline{\alpha}$ of the winding of 45 to 90 °, preferably 60 to 90 °, wherein if the size of the orientation angle $\underline{\beta}$ is 0 ° (and therefore the size of the pitch angle $\underline{\alpha}$ of the winding is 90 °), strands of reinforcing fibres $\underline{2}$ are deposited on the forming core $\underline{1}$ parallel with the longitudinal axis $\underline{10}$ of this forming core $\underline{1}$. The reinforcing fibres 2 thus laid are fixed at least in parts of the forming core $\underline{1}$ with an orientation angle $\underline{\beta}$ less than 30 ° (i.e., the pitch angle $\underline{\alpha}$ of the winding greater than 60 °), namely either by cover winding of the reinforcing fibres $\underline{20}$ of another type (preferably at a lower cost, such as glass fibres, polymer fibres, fibres from recycled materials, fibres from biomaterial, etc.) with an orientation angle $\underline{\beta_V}$ of 30 to 60 ° (which corresponds to the pitch angle $\underline{\alpha_V}$ of

the winding of these fibres of 30 to 60°), wherein these fibres further increase the resulting mechanical properties of the composite, or if the further winding aims only at fixing the basic winding of the reinforcing fibres 2, by the winding of at least one fibre 3 of thermoplastic material, such as polypropylene, polyethylene, polyester, polyamide, etc. The material of this fibre 3 melts during the subsequent thermal curing of the composite, fixing the winding of the reinforcing fibres 2 in the desired spatial arrangement. The orientation angle $\beta_T$ of the fibre 3 made of thermoplastic material has a size greater than 30 ° and at the same time less than 90 °, preferably 50 to 80 ° (which corresponds to the size of the pitch angle $\alpha_T$ of the winding of this fibre 3 of 10 to 40 °), most preferably 60 to 70 ° (which corresponds to the size of the pitch angle $\alpha_T$ of the winding of this fibre 1 of 20 to 30 °), when fixation of the reinforcing fibres 2 can be achieved even on the curved parts of the forming core 1. Fixation of the reinforcing fibres 2 by the fibre 3 of thermoplastic material takes place immediately after the reinforcing fibres 2 are deposited on the surface of the forming core 1 - the thermoplastic material fibre 3 is preferably deposited on the coil of one of the rotary rings of the same winding head. If needed, it is also possible in this variant to cover the reinforcing fibres 2 with at least one cover winding of the reinforcing fibres 20 of another type (preferably at a lower cost). The cover winding preferably has an opposite orientation to that of the reinforcing fibres 2 or the upper layer of the reinforcing fibres 2.

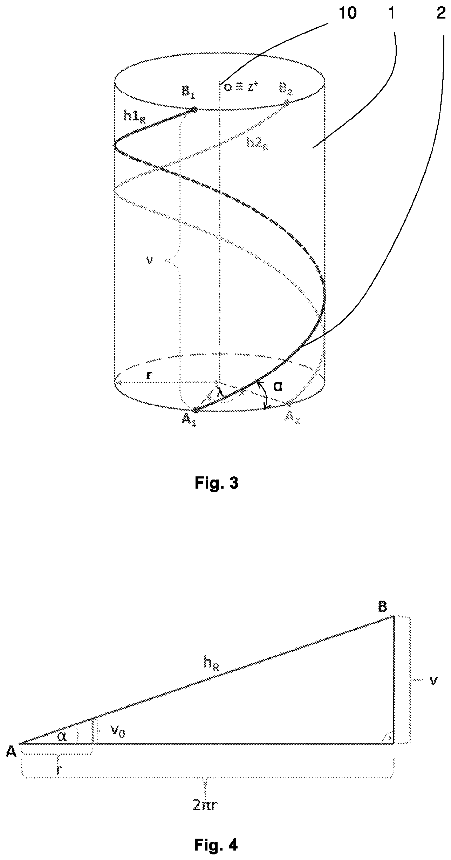

At least part of the strands of reinforcing fibres 2 form a helix on the surface of the forming core 1, either right-handed (the size of the pitch angle $\alpha$ of the winding has a positive value - see Fig. 2a) or left-handed (the size of the pitch angle $\alpha$ of the winding has a negative value - see Fig. 2b). When winding around the forming core 1, the individual strands of reinforcing fibres 2 form helices of the same parameters, which are only shifted around the circumference of the forming core 1 - see Fig. 3, which schematically shows two right-handed helices of reinforcing fibres 2 on the forming core 1 with a circular cross-section which are shifted from one another on the circumference of the forming core 1 by angle $\lambda$.

Fig. 4 schematically shows one helical thread of the winding of the reinforcing fibres 2 unrolled into a plane. It follows from this figure that the height $v$ of the thread is given by equation $v = 2\pi \cdot r \cdot tg\alpha$, where $r$ is the radius of the winding ($\approx$ radius of the forming core 1) and $\alpha$ is the pitch angle of the winding of the reinforcing fibres 2. The length $h_R$ of the reinforcing fibre 2 constituting the thread is then $h_R = 2\pi \cdot r \cdot \sqrt{1 + tg^2\alpha}$. It follows that when replacing the reinforcing fibres 2 wound on the forming core 1 with an orientation angle $\beta$ of 60 °, or a pitch angle $\alpha$ of the winding of 30 ° by the reinforcing fibres 2 laid parallel with the longitudinal axis 10 of the forming core 1 the need of the reinforcing fibres 2 in the given part of the fibre composite structure is reduced by 50 %; when replacing the reinforcing fibres 2 with a pitch

angle $\alpha$ of the winding of 45 °, the need of the reinforcing fibres 2 in the given part of the fibre composite structure is reduced by 29.28 % and when replacing the reinforcing fibres 2 with a pitch angle $\alpha$ of the winding of 60 °, the need for the reinforcing fibres 2 in the given part of the fibre composite structure is reduced by 13.40 %.

Using a suitable combination of winding high-quality reinforcing fibres 2 with good physical properties (e.g., carbon) with winding lower quality fibres (e.g., made of glass, recycled material or biomaterial) and, if appropriate, also at least one thermoplastic material fibre 3, a high-quality composite can be obtained, which has the necessary mechanical properties in the individual parts of the fibre composite structure. At the same time, due to the smaller proportion of the highest quality reinforcing fibres 2, significant financial savings can be achieved. In addition, the replacement of conventional fixation winding with the thermoplastic fibre 3 allows further reduction of the overall weight and volume of the composite.

In the method of laying reinforcing fibres 2 on the forming core 1 in the production of a composite according to the invention, the forming core 1 passes through the winding head, whereby the angular speed of rotation of the ring of the winding head with the reinforcing fibres 2 and/or the speed of advance motion of the forming core 1 smoothly changes at least once. As a result, the orientation angle $\beta$ of the reinforcing fibres 2 is also changed smoothly, and the reinforcing fibres 2 are thus laid in different parts of the forming core 1 with a different orientation angle $\beta$ and thus with a different pitch angle $\alpha$ of the winding. If the angular velocity of rotation of the ring of the winding head with reinforcing fibres 2 is equal to 0, the reinforcing fibres 2 are laid on the forming core 1 parallel with its longitudinal axis 10. The change of the orientation angle $\beta$ of the further reinforcing fibres 2 being laid is made on the basis of a continuous change of the angular speed of the respective circular ring of the winding head (provided the speed of passage of the core 1 through the winding head is constant), wherein the higher the circumferential speed of the given ring of the winding head, the larger the orientation angle $\beta$ of the reinforcing fibres 2 being laid and the smaller the pitch angle $\alpha$ of the winding being formed.

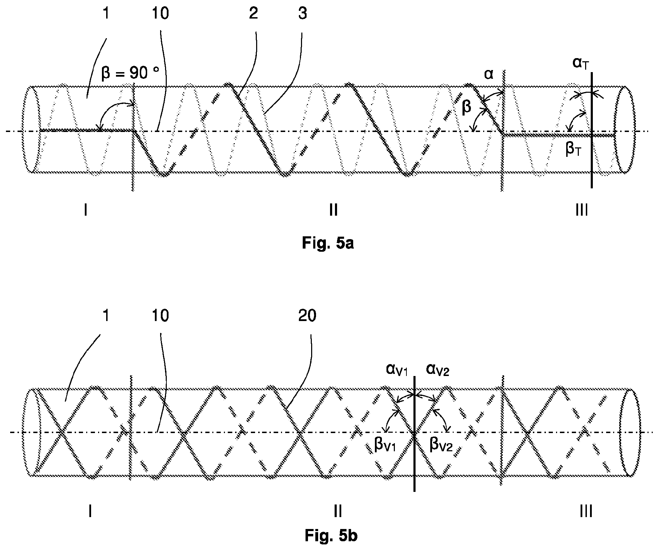

The method of laying reinforcing fibres 2 on a forming core 1 in the production of a fibre composite structure according to the invention will be explained below using a specific example of laying reinforcing fibres 2 on a straight forming core 1 with a circular cross-section shown in Figs. 5a and 5b. Along its length, the forming core 1 is in this case divided into three sections I, II, III. In section I, the reinforcing fibres 2 (preferably carbon fibres) are laid on the surface of the forming core 1 parallel with its longitudinal axis 10 - the forming core 1 passes through the winding head, which, or more specifically, the rings of the winding head with coils of reinforcing fibres 2 do not rotate. Thus, the orientation angle $\beta$ of these fibres is 0 ° and the pitch angle $\alpha$ of their winding is 90 °. After reaching the required length of section I, the angular speed of rotation of the winding head with the reinforcing fibres 2 increases to a non-zero value. As a result, in the subsequent section II of the forming core 1, the reinforcing fibres 2 are in this case wound on the forming core 1 around its circumference with an orientation angle $\beta$ of 60 °, i.e., with a pitch angle $\alpha$ of the winding of 30 °. After reaching the required length of section II, the angular speed of rotation of the ring of the winding head with coils of reinforcing fibres 2 again decreases to 0 and in the following section III of the forming core 1, the reinforcing fibres 2 are again laid on the surface of the forming core 1 parallel with its longitudinal axis 10. The orientation angle $\beta$ of these fibres is thus again equal to 0 °, the pitch angle $\alpha$ of the winding being 90 °. In contrast to the case where the reinforcing fibres 2 would be deposited along the entire length of the forming core 1 with an orientation angle $\beta$ of 45 °, in this case about 15 % less reinforcing fibres 2 are used (in sections I and III then more than 29 %). During this process, the reinforcing fibres 2 are immediately fixed by the winding of at least one fibre of thermoplastic material with an orientation angle $\beta_T$ of 80 ° in this case at least in places where the orientation angle $\beta$ of the reinforcing fibres 2 is less than 30 °, but preferably along the entire length of the forming core 1; the ring of the winding head with the coil of the fibre of thermoplastic material is preferably rotated at a constant angular speed the whole time. The orientation angle $\beta_T$ of the thermoplastic material fibre/fibres 3 is constant preferably along the entire length of the forming core 1, but it can take two or more sizes if necessary. The control of the angular speeds of rotation of the individual rotating rings of the winding head is realized by using external axes of a robot.

The reinforcing fibres 2 are laid on the surface of the forming core 1 into one or more layers, wherein in the case of multiple layers, these layers preferably differ from each other in the direction and/or orientation angle $\beta$, or pitch angle $\alpha$ of the winding. Each layer of the reinforcing fibres 2 is preferably fixed by at least one fibre 3 of thermoplastic material.

The reinforcing fibres 2 on the surface of the forming core 1 are preferably covered with a cover winding of reinforcing fibres 20 of another type (made, e.g., of glass, recycled materials, biomaterials, etc.), which further improve mechanical properties of the fibre composite structure being formed and at the same time provides it with a high quality and homogeneous surface layer. The orientation angle $\beta_V$ of the reinforcing fibres 20 of the cover winding is preferably 30 to 60 °; however, it can generally be less than 30 ° or greater than 60 °. In the variant shown in Fig. 5b, the cover winding of the reinforcing fibres 20 consists of two layers of reinforcing fibres 20 with orientation angles $\beta_{V1}$ = +45 ° and $\beta_{V2}$ = -45 ° and mutually opposite sense of laying.

Similarly, during the laying of the reinforcing fibres 2 on the forming core 1, the angular speed of rotation of the winding head ring with the coils of reinforcing fibres 2 can be continuously increased and/or decreased as required and the reinforcing fibres 2 can be laid on the surface of the forming core 1 at more than two different orientation angles $\beta$.

The forming core 1 can be either open or closed as required, the closed core having higher torsional rigidity, straight, or the core can be arbitrarily curved, with any cross-sectional shape. For most applications, the typical material of the forming core 1 is polyurethane, but basically any other material suitable for the application can be used. The described procedure is applicable both for "wet" laying, where the reinforcing fibres 2 impregnated with the matrix are laid on the forming core 1, and for "dry" laying, when the reinforcing fibres 2 without a matrix are deposited on the forming core 1. The forming core 1 has preferably a cross-section in the shape of a circle or an oval, or a triangle and a polygon - preferably regular, or with rounded vertices.

In general, the method of laying reinforcing fibres 2 on a forming core 1 in the production of a fibre composite structure according to the invention can be described in such a manner that the forming core 1 passes through the winding head with rotary rings with coils of reinforcing fibres 2, from which the reinforcing fibres 2 are laid on the surface of the forming core 1, whereby the speed of rotation of the rotary ring with coils of reinforcing fibres 2 and/or the speed of advance motion of the forming core 1 changes at least once as required and, consequently, the orientation angle $\beta$ of the reinforcing fibres 2 and thus the pitch angle $\alpha$ of the winding of reinforcing fibres 2 changes, too. Before or after the change of the speed of rotation of the rotary ring with coils of reinforcing fibres 2, the speed of rotation of this rotary ring can be zero, when the reinforcing fibres 2 are deposited on the surface of the forming core 1 with an orientation angle $\beta$ of 0 °, or a pitch angle $\alpha$ of the winding of 90 °, i.e., parallel with the longitudinal axis 10 of the forming core 1. The reinforcing fibres 20 are fixed at least in parts of the forming core 1 with an orientation angle $\beta$ of less than 30 ° either by at least one fibre 3 of thermoplastic material with an orientation angle $\beta_T$ greater than 45 ° and at the same time less than 90 °, preferably 50 to 80 °, most preferably 60 to 70 °, when the reinforcing fibres 2 can be fixed also on the curved parts of the forming core 1, or by at least one layer of reinforcing fibres 20 of another type with a non-zero orientation angle $\beta_V$ which are laid from at least one coil of the rotating ring of the winding head.

The fibre composite structure prepared by this method comprises a forming core 1, on which a composite material with at least one layer of reinforcing fibres 2 is deposited, the reinforcing fibres 2 of the composite material being deposited on the forming core 1 in its different sections along its length with a different orientation angle $\beta$, and thus also with a different pitch angle $\alpha$ of the winding, wherein the reinforcing fibres 2 of these sections smoothly merge into each other.

## Claims

1. A method of laying reinforcing fibres (2) on a forming core (1) in the production of a fibre composite structure, in which the forming core (1) passes through a winding head with a rotary ring with coils of reinforcing fibres (2), from which the reinforcing fibres (2) are unwound and laid on the surface of the forming core (1), wherein during the laying of the reinforcing fibres (2) on the surface of the forming core (1), the speed of rotation of the rotary ring with coils of reinforcing fibres (2) and/or the speed of advance motion of the forming core (1) smoothly changes at least once, as a result of which the orientation angle ($\beta$) between the longitudinal axis (10) of the forming core (1) and the axis of the reinforcing fibres (2) laid on the forming core (1) smoothly changes, wherein at least two sections are formed on the surface of the forming core (1) with a different orientation angle ($\beta$) of the reinforcing fibres (2), wherein the reinforcing fibres of these sections smoothly merge into each other, and **characterized in that** the reinforcing fibres (2) are immediately after being laid on the surface of the forming core (1) fixed by the winding of at least one fibre (3) of thermoplastic material.

2. The method according to claim 1, **characterized in that** in at least one section of the forming core (1) the reinforcing fibres (2) are laid on its surface with an orientation angle ($\beta$) of 30 to 60 °, and in at least one other section of the forming core (1), the reinforcing fibres (2) are laid on its surface with a smaller orientation angle ($\beta$).

3. The method according to claim 2, **characterized in that** in at least one section of the forming core (1), the reinforcing fibres (2) are laid on the surface of the forming core (1) with an orientation angle ($\beta$) less than 30 °.

4. The method according to claim 1, **characterized in that** at least one fibre of thermoplastic material is laid on the reinforcing fibres (2) under orientation angle ($\beta_T$) greater than 30 ° and at the same time less than 90 °.

5. A fibre composite structure which contains a forming core (1) on which is deposited a composite consisting of at least one layer of reinforcing fibres (2) bonded by a matrix, wherein the reinforcing fibres (2) of at least one layer of the composite are deposited on the forming core (1) in at least two sections which smoothly merge into each other and which differ in the orientation angle ($\beta$) of these reinforcing fibres (2) and **characterized in that** in at least one section of the forming core (1), the reinforcing fibres (2) are fixed by the winding of at least one fibre (3) of thermoplastic material.

6. The fibre composite structure according to claim 7, **characterized in that** in at least one section of the forming core (1), the reinforcing fibres (2) are laid with an orientation angle ($\beta$) of 30 to 60 °, and in at least one other section of the forming core (1), the reinforcing fibres (2) are laid with a smaller orientation angle ($\beta$).

7. The fibre composite structure according to claim 8, **characterized in that** in at least one section of the forming core (1) the reinforcing fibres (2) are laid with an orientation angle ($\beta$) of less than 30 °.

8. The fibre composite structure according to claim 7, **characterized in that** at least one fibre (3) of thermoplastic material is laid on the reinforcing fibres (2) with an orientation angle ($\beta_T$) greater than 30 ° and the same time less than 90 °.

9. The fibre composite structure according to any of claims 7 to 9,
**characterized in that** in at least one section of the forming core (1), the reinforcing fibres (2) are fixed by the winding of reinforcing fibres (20) of another type.

10. The fibre composite structure according to claim 11, **characterized in that** the reinforcing fibres (20) of another type are laid on the reinforcing fibres (2) with an orientation angle ($\beta_V$) of 30 to 60 °.

## Patentansprüche

1. Verfahren zum Auflegung von Verstärkungsfasern (2) auf einen Formkern (1) bei der Produktion einer Faserverbundkonstruktion, bei dem der Formkern (1) einen Wickelkopf mit einem drehbaren Ring der Spulen mit Verstärkungsfasern (2) durchläuft, von denen die Verstärkungsfasern (2) abgewickelt und auf der Oberfläche des Formkerns (1) auferlegten werden, wobei während dem Auflegung der Verstärkungsfasern (2) auf die Oberfläche des Formkerns (1) die Drehgeschwindigkeit des drehbaren Rings mit Spulen mit Verstärkungsfasern (2) und/oder die Vorschubgeschwindigkeit des Formkerns (1) mindestens einmal kontinuierlich geändert wird, wodurch sich der Orientierungswinkel ($\beta$) zwischen der Längsachse (10) des Formkerns (1) und der Achse der auf den Formkern (1) auferlegten Verstärkungsfasern (2) kontinuierlich ändert, wobei auf der Oberfläche des Formkerns (1) mindestens zwei Sektionen mit unterschiedlichem Orientierungswinkel ($\beta$) der Verstärkungsfasern (2) gebildet werden, die kontinuierlich aneinander anknüpfen und **dadurch gekennzeichnet, dass** die Verstärkungsfasern (2) unmittelbar nach dem Auflegung auf die Oberfläche des Formkerns (1) durch Aufwickeln mindestens einer Faser (3) aus thermoplastischem Material fixiert werden.

2. Verfahren nach dem Anspruch 1, **dadurch gekennzeichnet, dass** in mindestens einer Sektion des Formkerns (1) die Verstärkungsfasern (2) auf seine Oberfläche mit einem Orientierungswinkel (β) von 30° bis 60° und in mindestens einer anderen Sektion des Formkerns (1) die Verstärkungsfasern (2) auf seine Oberfläche mit einem kleineren Orientierungswinkel (β) auferlegten werden.

3. Verfahren nach dem Anspruch 2, **dadurch gekennzeichnet, dass** in mindestens einer Sektion des Formkerns (1) die Verstärkungsfasern (2) auf seine Oberfläche mit einem Orientierungswinkel (β) von weniger als 30° auferlegten werden.

4. Verfahren nach dem Anspruch 1, **dadurch gekennzeichnet, dass** mindestens eine Faser aus thermoplastischem Material mit einem Orientierungswinkel ($\beta_T$) von mehr als 30° und gleichzeitig weniger als 90° auf die Verstärkungsfasern (2) auferlegt wird.

5. Faserverbundkonstruktion, die einen Formkern (1) aufweist, auf dem ein Verbundwerkstoff auferlegt ist, der aus mindestens einer Schicht von Verstärkungsfasern (2) besteht, die durch eine Matrix verbunden sind, wobei die Verstärkungsfasern (2) mindestens einer Schicht des Verbundwerkstoffs auf dem Formkern (1) in mindestens zwei aneinander kontinuierlich anknüpfenden Sektionen auferlegten sind, die sich im Orientierungswinkel (β) dieser Verstärkungsfasern (2) unterscheiden, und **dadurch gekennzeichnet, dass** in mindestens einer Sektion des Formkerns (1) die Verstärkungsfasern (2) durch Aufwickeln mindestens einer Faser (3) aus thermoplastischem Material fixiert sind.

6. Faserverbundkonstruktion nach dem Anspruch 5, **dadurch gekennzeichnet, dass** in mindestens einer Sektion des Formkerns (1) die Verstärkungsfasern (2) mit einem Orientierungswinkel (β) von 30° bis 60° und in mindestens einer anderen Sektion des Formkerns (1) die Verstärkungsfasern (2) mit einem kleineren Orientierungswinkel (β) auferlegten sind.

7. Faserverbundkonstruktion nach dem Anspruch 5, **dadurch gekennzeichnet, dass** in mindestens einer Sektion des Formkerns (1) die Verstärkungsfasern (2) mit einem Orientierungswinkel (β) von weniger als 30° auferlegten sind.

8. Faserverbundkonstruktion nach dem Anspruch 11, **dadurch gekennzeichnet, dass** mindestens eine Faser (3) aus thermoplastischem Material mit einem Orientierungswinkel ($\beta_T$) von mehr als 30° und gleichzeitig weniger als 90° auf den Verstärkungsfasern (2) auferlegt ist.

9. Faserverbundkonstruktion nach einem der Ansprüche 5 bis 8, **dadurch gekennzeichnet, dass** in mindestens einer Sektion des Formkerns (1) die Verstärkungsfasern (2) durch Aufwickeln der Verstärkungsfasern (20) eines anderen Typs fixiert sind.

10. Faserverbundkonstruktion nach dem Anspruch 9, **dadurch gekennzeichnet, dass** die Verstärkungsfasern (20) eines anderen Typs mit einem Orientierungswinkel ($\beta v$) von 30° bis 60° auf den Verstärkungsfasern (2) auferlegten sind.

**Revendications**

1. Procédé de pose de fibres de renfort (2) sur un noyau de moulage (1) lors de la fabrication d'une structure composite fibreuse, lors duquel le noyau de moulage (1) passe par une tête d'enroulement avec un anneau rotatif avec bobines de fibres de renfort (2), à partir desquelles les fibres de renfort (2) se déroulent et sont déposées sur la surface du noyau de moulage (1), tandis que la vitesse de rotation de l'anneau rotatif avec les bobines de fibres de renfort (2) et/ou la vitesse de déplacement du noyau de moulage (1) sont modifiées au moins une fois de manière continue pendant la pose des fibres de renfort (2) sur la surface du noyau de moulage (1), ce qui modifie de manière continue l'angle (β) d'orientation entre l'axe longitudinal (10) du noyau de moulage (1) et l'axe des fibres de renfort (2) posées sur le noyau de moulage (1), tandis qu'au moins deux sections avec un angle (β) d'orientation des fibres de renfort (2) différent se succèdent de manière continue, **caractérisée en ce que** les fibres de renfort (2) sont fixées immédiatement après leur dépôt sur la surface du noyau de moulage (1) par l'enroulement d'au moins un filament (3) thermoplastique.

2. Procédé selon la revendication 1, **caractérisé en ce que** dans au moins une section du noyau de moulage (1), les fibres de renfort (2) sont posées sur sa surface avec un angle d'orientation (β) compris entre 30 et 60°, et dans au moins une autre section du noyau de moulage (1), les fibres de renfort (2) sont posées sur sa surface avec un angle d'orientation (β) plus petit.

3. Procédé selon la revendication 2, **caractérisé en ce que** dans au moins une section du noyau de moulage (1), les fibres de renfort (2) sont placées sur sa surface avec un angle d'orientation (β) inférieur à 30°.

4. Procédé selon la revendication 1, **caractérisé en ce**

**qu'**au moins un filament thermoplastique est déposé sur les fibres de renfort (2) avec un angle d'orientation ($\beta_T$) supérieur à 30° et en même temps inférieur à 90°.

5. Structure composite fibreuse qui comprend un noyau de moulage (1) sur lequel est déposé un composite formé d'au moins une couche de fibres de renfort (2) liées par une matrice, tandis que les fibres de renfort (2) d'au moins une couche du composite sont déposées sur le noyau de moulage (1) dans au moins deux sections se succédant de manière continue, qui diffèrent par l'angle ($\beta$) d'orientation de ces fibres de renfort (2), et **caractérisée en ce que**, dans au moins une section du noyau de moulage (1), les fibres de renfort (2) sont fixées par enroulement d'au moins un filament (3) thermoplastique.

6. Structure composite fibreuse selon la revendication 5, **caractérisée en ce que**, dans au moins une section du noyau de moulage (1), les fibres de renfort (2) sont disposées avec un angle d'orientation ($\beta$) compris entre 30 et 60°, et dans au moins une autre section du noyau de moulage (1), les fibres de renfort (2) sont disposées avec un angle d'orientation ($\beta$) plus petit.

7. Structure composite fibreuse selon la revendication 5, **caractérisée en ce que**, dans au moins une section du noyau de moulage (1), les fibres de renfort (2) sont disposées avec un angle d'orientation ($\beta$) inférieur à 30°.

8. Structure composite fibreuse selon la revendication 11, **caractérisée en ce qu'**au moins un filament (3) thermoplastique est disposé sur les fibres de renfort (2) avec un angle d'orientation ($\beta_T$) supérieur à 30° et en même temps inférieur à 90°.

9. Structure composite fibreuse selon l'une des revendications de 5 à 8, **caractérisée en ce que**, dans au moins une section du noyau de moulage (1), les fibres de renfort (2) sont fixées par enroulement de fibres de renfort (20) d'un autre type.

10. Structure composite fibreuse selon la revendication 9, **caractérisée en ce que** les fibres de renfort (20) d'un autre type sont disposées sur les fibres de renfort (2) avec un angle d'orientation ($\beta_V$) compris entre 30 et 60°.

**Fig. 1**

**Fig. 2a**

**Fig. 2b**

**Fig. 3**

**Fig. 4**

**Fig. 5a**

**Fig. 5b**

**REFERENCES CITED IN THE DESCRIPTION**

**Patent documents cited in the description**

- FR 2874852 A1